# EUROPÄISCHE PATENTSCHRIFT

(11) **EP 2 475 537 B1**
(45) Veröffentlichungstag und Bekanntmachung des Hinweises auf die Patenterteilung: **25.03.2015**
(21) Anmeldenummer: 10742488.9
(22) Anmeldetag: 10.08.2010
(51) Int. Cl.: F24F 13/14, B60H 1/34, F24F 13/06

(54) **BOGENFÖRMIGE LUFTDÜSE**
ARCUATELY SHAPED AIR OUTLET
AÉRATEUR ARQUÉ

(30) Priorität: 08.09.2009 DE 202009005250 U
(43) Veröffentlichungstag der Anmeldung: 18.07.2012
(73) Patentinhaber: Dr. Schneider Kunststoffwerke GmbH, 96317 Kronach (DE)
(72) Erfinder: GRÜDL, Alexander, 96358 Teuschnitz (DE)
(74) Vertreter: Pröll, Jürgen
(86) Internationale Anmeldenummer: PCT/EP2010/061622
(87) Internationale Veröffentlichungsnummer: WO 2011/029683

(56) Entgegenhaltungen:
- EP-A1- 1 389 543
- EP-A1- 1 457 371
- DE-U1-202004 006 257
- FR-A1- 2 809 349

## Beschreibung

Die Erfindung betrifft eine Luftdüse zum Leiten von Luftströmen mit den im Oberbegriff des Anspruches 1 angegebenen Merkmalen.

Luftdüsen sind Düsen, die beispielsweise in Heizungs-, Klima- oder Belüftungsanlagen eingebaut sind, um Luftströme an einen bestimmten Ort oder Raum zu leiten. Die Luftdüsen sind hierzu an einen Luftzuführschlauch oder eine Luftzuführleitung, die meist an der Rückseite der Luftdüse angebracht ist, angeschlossen. Die Luftdüsen weisen Luftableitmittel, wie z.B. Lamellen, auf, die die Luft in eine gewünschte Richtung lenken sollen. Diese Luftableitmittel können beweglich angebracht sein, um eine Verstellung der Luftströmungsrichtung zu ermöglichen. In der Regel ist an dieser Art von Luftdüsen ein Antrieb, manuell oder elektrisch, wie beispielsweise ein Stellrad oder ein Motor, zum Verstellen der Luftableitmittel angebracht, über die Luftableitmittel verstellt werden. Es gibt aber auch Varianten von Luftdüsen, die keine Luftableitmittel aufweisen, sondern nur eine Luftdüsenöffnung mit einer Gitterstruktur oder sonstigen Luftdurchtrittsöffnungen, die zur Abdeckung der Luftdüse vorgesehen sind. Lüftdüsen der bekannten Art weisen eine geradlinige oder runde Struktur auf.

In der DE 20 2004 006 257 U1 ist eine Luftdüse in einem geradlinigen und eckigen Gehäuse beschrieben. Die Luftableitmittel sind ovale oder runde Scheiben oder weisen eine Freiform auf. Die Scheiben sind parallel auf einer starren Welle in einer Schrägstellung angeordnet, so dass sie bei Drehung der Welle eine Veränderung der Luftströmungsrichtung bewirken. Eine ähnliche Ausbildung einer Düse ist aus der US 5,188,561 A bekannt.

Ausgehend vom Stand der Technik liegt der Erfindung die Aufgabe zu Grunde, eine Luftdüse, insbesondere für Heizungs-, Klima- und Belüftungsanlagen in Kraftfahrzeugen zu gestalten, die in unterschiedlichste Flächengegebenheiten eingesetzt werden kann und unterschiedliche Formgegebenheiten der Wand, in der sie verbaut werden soll, berücksichtigt und eine höhere Gestaltungsfreiheit bietet, aber trotzdem kostengünstig herstellbar sein soll.

Die Erfindung löst die Aufgabe durch Ausgestaltung der Luftdüse gemäß der in Anspruch 1 angegebenen Merkmale. Weiterführende Angaben und Ausführungsformen sind in den Unteransprüchen im Detail beschrieben.

Die Erfindung ermöglicht es, dass der Luftaustrittskanal jede beliebige längsgebogene Struktur aufweisen und dennoch mit Luftableitscheiben besetzt werden kann, die auf einer flexiblen Welle oder einer Gelenkwelle verdrehsicher befestigt oder in Längsrichtung um einen definierten Winkel verschwenkbar gelagert sind. Die flexible Welle kann selbstverständlich über die Länge des Luftaustrittskanals verteilt angeordnete Lager abgestützt sein. Ist der Luftaustrittskanal nicht so lang ausgebildet, so ist dies nicht erforderlich. Weist dieser aber eine Länge von beispielsweise 15 bis 20 cm auf, so empfiehlt es sich, die Welle mindestens nicht nur an den Seitenabschnitten abzustützen, sondern auch mittels eines weiteren Lagers, z. B. im Mittenabschnitt, zusätzlich abzustützen. Eine entsprechende Lagerstelle muss dann in dem Kanal vorgesehen sein.

Der Kanal kann grundsätzlich ein offener Luftaustrittskanal sein, so dass die Luftableitscheiben voll sichtbar sind. Der Kanal kann aber auch mit einer Abdeckung bzw. einer Blende versehen sein, die beispielsweise Rippen aufweist, wodurch das Design vorgegeben ist. Die Abdeckung kann auch aus einer gelochten Fläche bestehen oder eine sonstige durchgebrochene Fläche aufweisen, um den Luftaustritt in gewünschter Weise zu ermöglichen. Der Kanal selbst kann auch oder den Radien der Luftableitscheiben entsprechend angepasste Schalenform besitzen. Der Kanal sollte aber so gestaltet sein, dass keine merkliche Einengung gegenüber der maximalen Breite der Scheiben gegeben ist, um in gewünschter Weise den Luftstromaustritt zu ermöglichen.

Das Gehäuse der Luftdüse ist in klassischer Form ausgebildet und erstreckt sich in den Raum hinter einer Fahrzeugwand, beispielsweise dem Armaturenbrett, und ist rückseitig an einer Luftzuführleitung angeschlossen. Vorderseitig kann nun der Luftaustrittskanal direkt angeformt sein. Der Luftaustrittskanal kann aber auch als Einzelteil beispielsweise aus Kunststoff oder Metall gefertigt sein und mit dem Gehäuse verbunden werden. In dem Gehäuse selbst befindet sich in der Regel auch noch eine Schließklappe, um die Luftzufuhr über ein Stellrad einstellen zu können. Solche Gehäuse sind üblicherweise aus Kunststoff hergestellt, grundsätzlich können sie aber auch aus anderen Wirkstoffen, z. B. Metall oder Holz, hergestellt sein. Dies gilt für den Luftaustrittskanal gleichermaßen.

Darüber hinaus kann nicht nur die Querschnittsform beliebig gewählt werden, sondern auch die Querschnittsweite. In diesem Fall können beispielsweise Abschnitte eine größere Weite aufweisen und andere Abschnitte eine geringere Weite. Soweit die Luftableitscheiben in diesen Bereichen vorgesehen sind, sind sie in den Durchmessern den Weiten entsprechend anzupassen. Um eine seitliche Abstützung zu gewährleisten, können die Durchmesser auf die lichten Weiten so abgestimmt sein, dass die Stirnflächen an den Innenseiten der Luftaustrittskanäle zumindest punktuell anliegen.

Zur Vermeidung von Klappergeräuschen können die Luftableitscheiben auch an ringförmigen Führungsbahnen geführt anliegen, die aus Rippen in den Luftaustrittskanal und in der Abdeckung oder Blende gebildet werden. Zum Einen ist es möglich, in eine Scheibe nur eine einzige Lagerausnehmung radial einzubringen, mit der die Scheibe auf eine solche Rippe aufgesetzt und beim Drehen geführt wird. Es ist aber auch möglich, mindestens an einer Seite einer Luftableitscheibe ein Führungselement vorzusehen, z. B. anzuspritzen, wenn die Scheibe aus Kunststoff besteht, der mindestens eine Führungsnut aufweist, die auf die kreisbogenförmige Führung der Rippenanordnung aufgreift. Hierdurch ist zugleich auch die Welle zusätzlich abgestützt. Weitere Abstützungen sind dann nicht erforderlich, auch dann nicht, wenn die Welle sehr lang ausgebildet ist. Um eine exakte Führung zu erreichen, können auch zwei um 180° versetzt an den beiden Seiten der Scheiben angeordnete Führungselemente vorgesehen sein, die sich von den Randbereichen parallel zur Achse und über einen Teil der Tiefe des Schrägverlaufs der Scheibe erstrecken. Diese Führungselemente greifen mit den Führungsnuten auf zwei benachbarte Führungen auf.

Der Luftaustrittskanal kann jede beliebige zwei- oder dreidimensionale Bogenform aufweisen. Zum Beispiel ist eine L-Form, eine S-Form oder eine Wellenform möglich. Des Weiteren kann eine Anpassung an eine Wölbung in der dritten Dimension des Armaturenbrettes erfolgen, ohne dass die gewünschte Wirkung der Ableitung des Luftstromes dadurch beeinträchtigt werden würde. Dies gilt auch für solche Luftaustrittskanäle, die an ein Gehäuse im rechten Winkel angebracht sind, gleichermaßen wie für solche, die seitlich ihre Luftzufuhr aus einem Gehäuse der Düse erhalten.

Als Drehantrieb für die Welle kann in klassischer Form ein Stell- oder Bedienrad seitlich an dem Luftaustrittskanal angebracht sein. Der Luftaustrittskanal kann auch beidseitig an einem Gehäuse einer Düse verlaufend angeordnet sein oder auch nur einseitig. All dies lässt die erfinderische Ausgestaltung des Luftaustrittskanals mit der innenliegenden flexiblen Welle zu. Es ist selbstverständlich auch möglich, mit der Welle einen elektromotorischen Antrieb zu koppeln, der beispielsweise über Tasten schaltbar gesteuert wird, um durch Links- oder Rechtsdrehung gewünschte Verstellungen des Luftaustrittes zu ermöglichen. Die auf der Welle vorgesehenen Luftableitscheiben bewirken bei der Drehung quasi eine pendelnde Ableitung. Der Luftaustrittskanal kann auch aus einer Aneinanderreihung von kugelförmigen Abschnitten bestehen, bei denen auf der durchgehenden, flexiblen Welle Scheiben symmetrisch oder asymmetrisch angeordnet sind, die jeweils eine geschlossene äußere Kugelstruktur bilden. Wenn in diesem Fall eine Abdeckung mit Luftaustrittsöffnungen vorgesehen ist, ist diese der Kugelform anzupassen, wenn die Ablenkmittel aus dem Kanal vorstehen.

Grundsätzlich kann die Welle durch einen Anschlag im Drehwinkel begrenzt werden. Sie kann aber auch unbegrenzt durchdrehend ausgeführt sein. So ist es beispielsweise möglich, eine 90°- oder eine 180°- oder 270°-Drehung zu ermöglichen oder sogar eine 360°-Drehung oder darüber hinaus ein Durchdrehen, um in gewünschter Weise die Luftableitung einstellen zu können. Ist der Drehwinkel begrenzt, so kann die Verstellung nur durch Links- und Rechtsdrehung in gewünschter Weise verändert werden. Die Luftableitscheiben und/oder das Stellrad sind vorzugsweise mittels Formschluss auf der Welle angebracht. Sie können aber auch durch Kraftschlussverbindung, beispielsweise durch eine Rastfeder, daran gehalten werden. In jedem Fall müssen die Teile verdrehsicher an der Welle gehalten sein.

Wenn die Welle zusammen mit den Luftableitscheiben im Spritzgießverfahren aus Kunststoff hergestellt wird, können die Scheiben und die Welle bei der Herstellung im Zweikomponentenspritzverfahren aus unterschiedlichen Kunststoffen gleichzeitig hergestellt werden. Eine gesonderte Herstellung der Welle und der Scheiben ist aber auch möglich. Danach müssen dann die Scheiben entsprechend aufgezogen und befestigt werden. Die Luftableitscheiben können selbstverständlich auch oval ausgebildet sein oder auch eine Freiform besitzen. Dies muss jeweils bei der Querschnittsauslegung des Kanals berücksichtig werden, damit kein Anecken an den Wänden erfolgt. Um bestimmte Luftverwirbelungen zu erreichen, können die Luftableitscheiben in flacher, gebogener, gewellter oder gewölbter Struktur ausgeführt sein.

Grundsätzlich können die Luftableitscheiben in einer geraden Stellung auf die Welle, also in 90°-Stellung, aufgebracht sein, sie können aber auch in einer Schrägstellung darauf aufgebracht sein. Sie können darüber hinaus symmetrisch oder asymmetrisch auf der Welle angebracht sein. In entsprechender Weise ist es lediglich erforderlich, dass der Kanal eine entsprechende Ausbuchtung oder Anpassung in der Breite aufweist. Bei Anordnung in einer Schrägstellung hat dies den Vorteil, dass durch Drehen der Welle die Richtung der Luftströmung stets verändert werden kann. Darüber hinaus können die Luftableitscheiben auch in regelmäßigen oder in unregelmäßigen Abständen oder auch in Längsrichtung der Welle verschwenkbar und verdrehgesichert befestigt sein. Die Abstände können beispielsweise ca. 6 mm bis ca. 18 mm betragen. Der Neigungswinkel kann beispielsweise zwischen 30° und 80° liegen. Wenn der Neigungswinkel 45° beträgt, kann eine lineare Anordnung auch im Bogenbereich des Kanals erzielt werden. Im Falle, dass die Luftableitscheiben in Längsrichtung verschwenkbar auf der Welle angeordnet sind, können darüber hinaus über Verbindungs- oder Mitkopplungselemente diese in der Neigung verstellt werden, wenn keine Führungselemente in Führungen greifen. Beispielsweise lassen sich die Scheiben gegen ihre federnde Lagerung im Winkel durch Ausübung einer Zugkraft verstellen. Die Zugkraft wird beispielsweise über eine Kette oder über Kopplungsglieder auf ein Mitnahmerad mit auf einer Umfangsbahn verlaufenden Wellenkurve übertragen, welches synchron mit dem Stellrad betätigt wird. Dieses Mitnahmerad kann auch eine bogenförmige Umlaufbahn aufweisen, damit auch innerhalb der Drehung verschiedene Schrägstellungen möglich sind.

Die Welle selbst kann z. B. aus Kunststoff oder aus Gummi bestehen oder auch aus einem Kunststoff- oder Stahlseil oder aus einem Kunststoffseil, das mit einer Stahlseele versehen ist. Vorzugsweise wird aber flexibles Kunststoffmaterial verwendet, welches ein hohes, polares Widerstandsmoment aufweist. Des Weiteren kann die Welle auch eine Gelenkwelle sein. Diese kann aus einzelnen Abschnitten bestehen, an deren Enden jeweils Kreuz- oder Kugelgelenke angebracht sind, die mit dem nächsten Element in Verbindung stehen, so dass auf dem Abschnitt eine Scheibe aufgebracht werden kann. Mindestens die Welle kann auch aus lichtdurchlässigem und/oder lichtleitendem Material bestehen, so dass von einer Lichtquelle über die Stirnfläche beispielsweise Licht einfluten kann. Die Lichtquelle wird hierzu an dem Gehäuse oder an einer äußeren Kanalwand montiert. Die Lichtquelle ist so ausgerichtet, dass das Licht in die Welle flutet. Hierdurch können besondere optische Effekte erzielt werden. Wenn die Welle nur lichtleitend ist und kein Licht auszutreten vermag, wenn sie z. B. lackiert ist, und nur partiell dort, wo die Luftableitscheiben angebracht sind, Licht austreten kann, so kann hierüber erzielt werden, dass das Licht aus den Flächen oder nur aus den Ringkanten oder den äußeren Mantelflächen der Scheiben austritt. Wird bei der Herstellung beispielsweise Polycarbonat-Kunststoff verwendet, so ist ersichtlich, dass über die Umfangsflächen das Licht gezielt austreten kann. Auch hierüber sind besondere optische Effekte realisierbar.

Die Erfindung wird nachfolgend anhand eines in der Zeichnung dargestellten Ausführungsbeispiels ergänzend erläutert.

In den Zeichnungen zeigen:
- FIG 1: einen Luftleitkanal nach der Erfindung, ausgelegt als Flachausströmer mit flexibler Welle in einer bestimmten Drehstellung des Bedienrades,
- FIG 2: den in Fig. 1 dargestellten gekrümmten Luftaustrittskanal bei gedrehter Welle und entsprechender Ausrichtung der Luftableitscheiben und
- FIG 3: eine Explosionszeichnung der Vorrichtung nach Fig. 1 und 2 mit der Darstellung der einzelnen Bauteile.

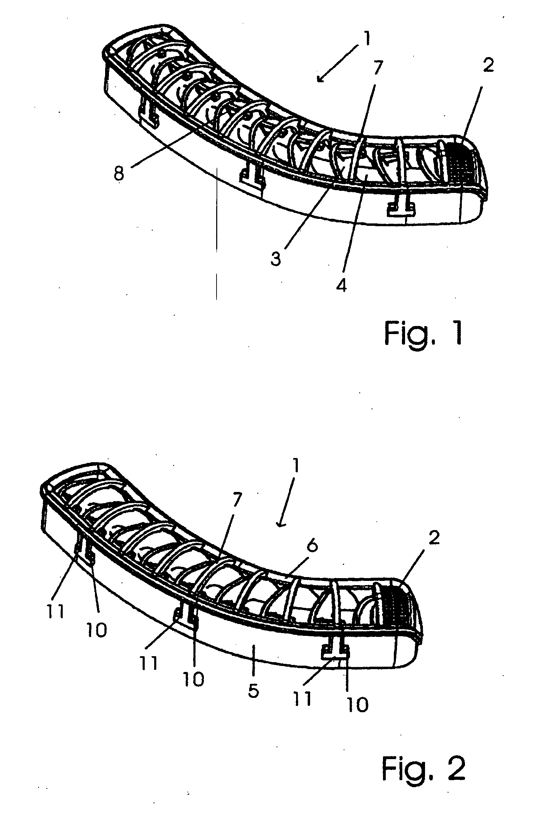

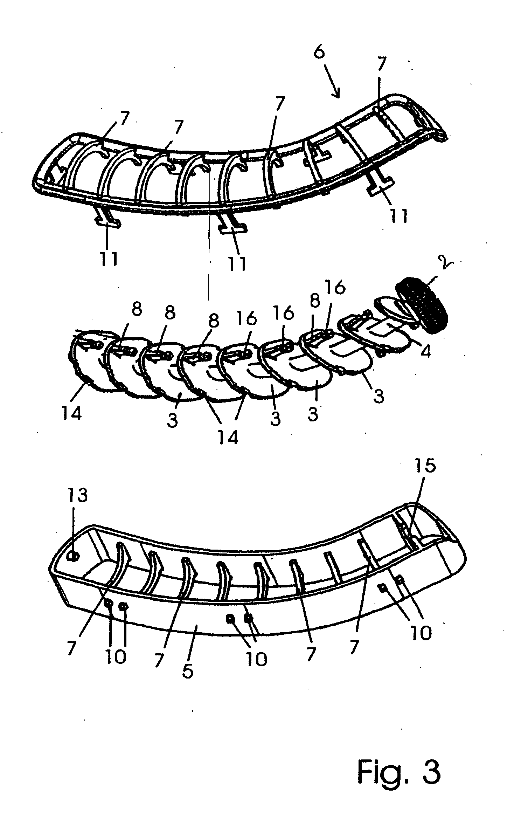

Das Beispiel in den Fig. 1, 2 und 3 zeigt eine bogenförmige Luftdüse 1, die im Wesentlichen aus einem bogenförmigen Luftaustrittskanal 5 besteht, der eine im Querschnitt rechteckförmige Innenstruktur aufweist. Wie aus Fig. 3 unten zu ersehen ist, sind in diesen Luftaustrittskanal 5 Rippen 7 eingebracht, die eine kreisbogenförmige Struktur aufweisen. Die Rippen 7 sind in einem Abstand eingebracht, der dem Abstand der Luftableitscheiben 3 entspricht, die auf einer flexiblen Welle 4 angeordnet sind. Deckungsgleich zu den Rippen 7 und mit dem Luftaustrittskanal 5 ist eine Abdeckung 6 mit Rippen 7 angeordnet. Diese bilden kreisförmige Führungen nach dem Zusammensetzen des Luftaustrittskanals 5 und der Abdeckung 6. Die Form eines solchen Ausströmers kann nahezu beliebig sein. Beispielsweise kann sie, wie dargestellt, eine einfache Bogenform aufweisen, sie kann aber auch eine stärkere Krümmung, eine L-Form, eine S-Form und jede andere Freiform aufweisen. Der Kanal 5 kann auch einen dreidimensional ausgerichteten Längsverlauf aufweisen.

Die Welle 4 ist zum Einen mit ihrem einen Ende auf dem Lagerzapfen 13, der an einer Stirnwand vorsteht, befestigt und zum Anderen in einer Lagerschale 15 in der anderen Endwand eingesetzt und darin gesichert gehalten. Die Welle 4 besteht im Ausführungsbeispiel aus einem flexiblen Kunststoffmaterial, welches ein hohes polares Widerstandsmoment aufweist, so dass die Welle 4 gedreht werden kann, ohne Schaden zu nehmen und dabei gleichzeitig trotzdem relativ formstabil den Bogen beibehalten. Als Lagerschale 15 ist eine Q-Lagerung vorgesehen, die zweckmäßigerweise das Bedienrad bzw. Stellrad 2 aufnimmt. Das Bedienrad 2 ist fest mit der Welle 4 verbunden. Es ist ersichtlich, dass beim Drehen des Bedienrades 2 sich die Welle 4 mitdreht. Die Luftablenkscheiben 3 zum Ablenken des Luftstromes können einzeln auf die Welle aufgezogen werden, sie können aber auch im Mehrkomponentenspritzgießverfahren zusammen mit der Welle 4 hergestellt sein. Die einzelnen Luftableitscheiben 3 weisen einen Durchmesser auf, der dem Durchmesser der Führungen angepasst ist, die durch die Rippen 7 gebildet sind. Sie weisen ferner an einer Seite nach rechts und an der anderen Seite nach links um 180° versetzt angeordnete Führungselemente 8 auf, die an die Scheiben angespritzt sind. Diese Führungselemente 8 weisen eine Lagerungsnut 16 auf, mit der das Führungselement 8 auf die benachbarte Führung, die aus den Rippen 7 gebildet ist, aufgesetzt ist. Dadurch ist die jeweilige Luftableitscheibe 3 stets geführt. Hierauf kann aber grundsätzlich auch verzichtet werden, wenn die Durchmesser der Luftableitscheiben 3 den Führungsdurchmessern so angepasst sind, dass diese mit ihren äußeren Kanten an den Führungen abrollen, wenn die Welle 4 gedreht wird.

Es können weiterhin aber auch Führungsaussparungen 14 in den Luftableitscheiben 3 vorhanden sein, die ebenfalls auf die Führungen der Rippen 7 einsetzbar sind, so dass die Scheiben bei 45° Neigungsstellung hierüber geführt sind. Die Luftableitscheiben 3 sind beispielsweise mit Formschluss aufgebracht, so dass ihr Neigungswinkel sich in den Bogenbereichen beim Drehen der Welle 4 automatisch der jeweiligen Stellung anpasst.

Grundsätzlich kann das Stellrad 2 oder ein motorischer Antrieb an einem beliebigen Ort auf der Welle 4 vorgesehen sein oder über ein Zwischengetriebe hiermit zusammenwirken. Es können auch mehrere Stell- oder Bedienräder 2 vorgesehen sein. Ebenso können die Tasten zur Steuerung eines elektronischen Antriebs abgesetzt zum Luftaustrittskanal 5 an einer Raumwand befestigt sein.

Im Ausführungsbeispiel kann das Stellrad 2 um über 360° hinaus gedreht werden, da kein Anschlag die Drehbewegung einschränkt. Entsprechend wiederholen sich die Schrägstellungen und die Lagen der schräg auf die Welle 4 aufgebrachten Luftableitscheiben 3. Die Abdeckung 6 ist als Blende ausgeführt. Sie wird mittels Rastzungen 11 hinter Rastansätze 10 an den Seitenwänden des Luftaustrittskanals 5 rastend befestigt. Die geschlossene Einheit ist in den Fig. 1 und 2 dargestellt. Aus Fig. 1 ist eine Drehstellung ersichtlich, bei der die Führungselemente 8 sichtbar sind. Durch Drehen des Stellrades 2 ist in Fig. 2 eine Drehstellung eingenommen, in der völlig andere drehlagenbedingte Schrägstellungen der Luftableitscheiben 3 zu verzeichnen sind.

### Bezugszeichenliste

- 1: bogenförmige Luftdüse
- 2: Drehantrieb/Stellrad
- 3: Luftableitscheiben
- 4: Welle
- 5: bogenförmiger Luftaustrittskanal
- 6: Abdeckung
- 7: Rippen
- 8: Führungselement
- 10: Rastansätze
- 11: Rastzungen
- 13: Lagerzapfen
- 14: Führungsaussparung
- 15: Lagerschale
- 16: Lagerungsnut

## Patentansprüche

1. Luftdüse zum Leiten von Luftströmen, insbesondere für Heizungs-, Klima- und Belüftungsanlagen in Kraftfahrzeugen, aufweisend mindestens ein Gehäuse (5), eine Welle (4) mit daran angebrachten Luftableitscheiben (3) und einen Drehantrieb (2) zum Verstellen der Welle (4), **dadurch gekennzeichnet,** dass das Gehäuse (5) der Luftdüse (1) einen Luftaustrittskanal 5) mit einer längsgebogenen Struktur aufweist oder ein solcher Luftaustrittskanal (5) an einem Gehäuse angebracht ist, dass die Welle (4) eine flexible Welle (4) oder eine Gelenkwelle ist und dass auf der Welle (4) die Luftableitscheiben (3) fest oder lose, jedoch verdrehgesichert derart angebracht sind, die sie sich mit der Welle (4) drehen.

2. Luftdüse nach Anspruch 1, **dadurch gekennzeichnet,** dass der Luftaustrittskanal (5) eine in Längsrichtung gestreckte zweidimensionale oder dreidimensionale L-Form, eine Wellenform, eine S-Form, eine Kreisform, eine Teilkreisform oder eine Kombination aus mindestens zwei derselben aufweist.

3. Luftdüse nach Anspruch 1, **dadurch gekennzeichnet,** dass der Luftaustrittkanal (5) in seiner Breite variabel gestaltet ist und verengte oder verbreiterte, verkleinerte oder vergrößerte Abschnitte aufweist und dass die Luftleitscheiben der Dimensionierung des Abschnittes, in dem sie gelagert sind, angepasst sind.

4. Luftdüse nach Anspruch 1, **dadurch gekennzeichnet,** dass als Drehantrieb (2) mindestens an einem Ort auf der Welle (4) ein Stellrad (2) befestigt oder ein motorischer, insbesondere ein elektromotorischer Antrieb vorgesehen ist.

5. Luftdüse nach Anspruch 1 und 4, **dadurch gekennzeichnet,** dass der Antrieb (2) stufenlos oder in definierten Winkeln verfahrbar und/oder darüber hinaus einstellbar ist.

6. Luftdüse nach Anspruch 1, **dadurch gekennzeichnet,** dass die Luftableitscheiben (3) und/oder das Stellrad (2) mittels Formschluss oder Kraftschluss auf der Welle (4) angebracht sind.

7. Luftdüse nach Anspruch 1, **dadurch gekennzeichnet,** dass die Welle (4) mit den Luftableitscheiben (3) und/oder dem Stellrad (2) als Spritzgussteil gefertigt ist.

8. Luftdüse nach Anspruch 1, **dadurch gekennzeichnet,** dass die Luftableitscheiben (3) in runder oder ovaler, flacher, gebogener, gewölbter oder gewellter Struktur ausgeführt sind oder eine Freiform aufweisen.

9. Luftdüse nach Anspruch 1, **dadurch gekennzeichnet,** dass die Luftableitscheiben (3) in einer Schrägstellung auf der Welle (4) befestigt sind.

10. Luftdüse nach Anspruch 9, **dadurch gekennzeichnet,** dass die Schrägstellung der Luftableitscheiben (3) in einem Winkel zwischen 30° und 80° zur Längsachse der Welle (4) angeordnet sind.

11. Luftdüse nach Anspruch 1, **dadurch gekennzeichnet,** dass die Luftableitscheiben (3) zentrisch auf der Welle (4) in regelmäßigen oder unregelmäßigen Abständen oder in Längsrichtung der Welle (4) schwenkbar, jedoch verdrehgesichert befestigt sind.

12. Luftdüse nach Anspruch 1, **dadurch gekennzeichnet,** dass die Luftableitscheiben (3) an mindestens einer Seite ein Führungselement (8) mit mindestens einer Lagerungsnut (16) aufweisen, in die eine zugeordnete kreisbogenförmige Führung (7) in dem Kanal (5) und/oder in eine damit verbundene luftdurchlässige Abdeckung (6) eingreift.

13. Luftdüse nach Anspruch 12, **dadurch gekennzeichnet,** dass die kreisbogenförmige Führung aus Rippen (7) in der Abdeckung (6), die auf den Kanal (5) aufsetzbar und daran befestigbar ist und den Rippen (7) im bogenförmigen Kanal (5) gebildet ist.

14. Luftdüse nach Anspruch 12, **dadurch gekennzeichnet,** dass mindestens ein weiteres Führungselement(8) und/oder eine Führungsaussparung (14) an den Luftableitscheiben (3) vorgesehen ist, das oder die ebenfalls auf die Rippen (7) einer kreisbogenförmigen Führung (13) greift.

15. Luftdüse nach Anspruch 12, **dadurch gekennzeichnet,** dass jeweils mindestens ein Führungselement (8) auf der Vorder- und auf der Hinterseite der Scheibenfläche der Luftableitscheiben (3) angeordnet ist.

16. Luftdüse nach Anspruch 1, **dadurch gekennzeichnet,** dass die Welle (4) aus Kunststoff oder Gummi besteht oder ein Kunststoff- oder ein Stahlseil ist.

17. Luftdüse nach Anspruch 1, **dadurch gekennzeichnet,** dass die Einzelteile der Luftdüse (1) aus lichtdurchlässigem und/oder lichtleitendem Material bestehen.

18. Luftdüse nach Anspruch 17, **dadurch gekennzeichnet,** dass in der Luftdüse (1) mindestens ein Beleuchtungsmittel derart angeordnet ist, dass mindestens ein Teil des Lichts in die Welle (4) flutet.

19. Luftdüse nach Anspruch 17, **dadurch gekennzeichnet,** dass mindestens die Welle (4) und/oder die Luftableitscheiben (3) aus fluoreszierendem Polycarbonat-Material (LISA-Material) bestehen oder derart beschichtet sind, dass das Licht nur an den Kanten der Luftableitscheiben (3) austritt.

## Claims

1. Air nozzle for conducting air flows, particularly for heating, air-conditioning and ventilating installations in motor vehicles, comprising at least one housing (5), a shaft (4) with air diverter discs (3) mounted thereon and a rotary drive (2) for adjusting the shaft (4), **characterised in that** the housing (5) of the air nozzle (1) has an air outlet channel (5) with a longitudinally curved structure or such an air outlet channel (5) is mounted on a housing, that the shaft (4) is a flexible shaft (4) or a jointed shaft and that the air diverter discs (3) are so mounted on the shaft (4) fixedly or loosely, but to be secure against rotation, that they rotate with the shaft (4).

2. Air nozzle according to claim 1, **characterised in that** the air outlet channel (5) has a two-dimensional or three-dimensional L shape elongated in longitudinal direction, a wave shape, an S shape, a circular shape, a part-circular shape or a combination of at least two thereof.

3. Air nozzle according to claim 1, **characterised in that** the air outlet channel (5) is formed to be variable in the width thereof and has narrowed or widened, reduced or enlarged sections and that the air diverter discs are adapted to the dimensioning of the section in which they are mounted.

4. Air nozzle according to claim 1, **characterised in that** as rotary drive (2) a setting wheel (2) is fastened at at least one location on the shaft (4) or a motorised, particularly an electric-motor-driven, drive is provided.

5. Air nozzle according to claim 1 and 4, **characterised in that** the drive (2) is movable steplessly or in defined angles and/or is addition is settable.

6. Air nozzle according to claim 1, **characterised in that** the air diverter discs (3) and/or the setting wheel (2) are mounted on the shaft (4) by means of mechanically positive connection or friction couple.

7. Air nozzle according to claim 1, **characterised in that** the shaft (4) together with the air diverter discs (3) and/or the setting wheel (2) is made as an injection-moulded part.

8. Air nozzle according to claim 1, **characterised in that** the air diverter discs (3) are constructed with a round or oval, flat, bent, curved or wavy structure or have a free shape.

9. Air nozzle according to claim 1, **characterised in** the air diverter discs (3) are fastened on the shaft (4) in an inclined setting.

10. Air nozzle according to claim 9, **characterised in that** the inclined setting of the air diverter discs (3) is arranged at an angle between 30° and 80° with respect to the longitudinal axis of the shaft (4).

11. Air nozzle according to claim 1, **characterised in that** the air diverter discs (3) are centrally fastened on the shaft (4) at uniform or non-uniform spacings or in longitudinal direction of the shaft (4) to be pivotable, but secure against rotation.

12. Air nozzle according to claim 1, **characterised in that** the air diverter discs (3) have at at least one side a guide element (8) with at least one mounting groove (16) in which an associated arcuate guide (7) engages in the channel (5) and/or in an air-permeable cover (6) connected therewith.

13. Air nozzle according to claim 12, **characterised in that** the arcuate guide is formed from ribs (7) in the cover (6), which can be placed on the channel (5) and fastened thereto, and the ribs (7) in the curved channel (5).

14. Air nozzle according to claim 12, **characterised in that** at least one further guide element (8) and/or a guide recess (14) is or are provided at the air diverter discs (3), which is similarly engaged on the ribs (7) of an arcuate guide (13).

15. Air nozzle according to claim 12, **characterised in that** at least one respective guide element (8) is arranged on the front side and on the rear side of the disc surface of the air diverter discs (3).

16. Air nozzle according to claim 1, **characterised in that** the shaft (4) consists of plastics material or rubber or is a plastics-material cable or steel cable.

17. Air nozzle according to claim 1, **characterised in that** the individual parts of the air nozzle (1) consist of light-permeable and/or light-transmissive material.

18. Air nozzle according to claim 17, **characterised in that** at least one light-emitting means is so arranged in the air nozzle (1) that at least a part of the light streams into the shaft (4).

19. Air nozzle according to claim 17, **characterised in that** at least the shaft (4) and/or the air diverter discs (3) consists or consist of a fluorescent polycarbonate material (LISA material) or are so coated that the light issues only at the edges of the air diverter discs (3).

## Revendications

1. Aérateur pour diriger les courants d'air, notamment pour les installations de chauffage, de climatisation et de ventilation dans les véhicules, présentant au moins un carter (5), un arbre (4) avec des disques de déviation de l'air (3) placés dessus et un entraînement pivotant (2) pour régler l'arbre (4) caractérisé en cela que le carter (5) de l'aérateur (1) présente un canal de sortie d'air (5) avec une structure pliée dans la longueur ou qu'un tel canal de sortie d'air (5) est placé sur un carter, que l'arbre(4) est un arbre flexible (4) ou un arbre articulé ou que sur l'arbre (4) les disques de déviation de l'air (3) sont fixes ou mobiles, mais sont placés cependant de manière à ne pas se déformer de telle sorte à ce qu'ils tournent avec l'arbre (4).

2. Aérateur selon la revendication 1 **caractérisée** en cela que le canal de sortie d'air (5) présente une forme en L étendue dans le sens de la longueur à deux ou trois dimensions, une forme ondulée, une forme en S, une forme de cercle, une forme de demi-cercle, ou une combinaison d'au moins deux.

3. Aérateur selon la revendication 1 caractérisé en cela que le canal de sortie d'air (5) est formé de manière variable dans sa largeur et présente des portions réduites ou élargies et en cela que les disques de déviation de l'air sont ajustés au dimensionnement de la section dans laquelle ils sont placés.

4. Aérateur selon la revendication 1 caractérisé en cela qu'en tant qu'entraînement pivotant (2) une roue de réglage (2) est fixée sur un emplacement sur l'arbre (4) ou qu'un entraînement motorisé, notamment un entraînement électromotorisé, est prévu.

5. Aérateur selon les revendications 1 et 4 **caractérisée** en cela que l'entraînement (2) peut être déplacé en continu ou selon des angles définis et/ou peut être réglé au-delà.

6. Aérateur selon la revendication 1 caractérisé en cela que les disques de déviation de l'air (3) et/ou la roue de réglage (2) sont placés par complémentarité de forme ou par liaison de force sur l'arbre (4).

7. Aérateur selon la revendication 1 caractérisé en cela que l'arbre (4) est fabriqué avec les disques de déviation de l'air (3) et/ou avec la roue de réglage (2) en tant que pièce en fonte.

8. Aérateur selon la revendication 1 caractérisé en cela que les disques de déviation de l'air (3) sont exécutés selon une structure ronde ou ovale, plate, pliée, courbée ou ondulée ou présentent une forme libre.

9. Aérateur selon la revendication 1 caractérisé en cela que les disques de déviation de l'air (3) sont fixés dans une position inclinée sur l'arbre (4).

10. Aérateur selon la revendication 9 caractérisé en cela la position inclinée des disques de déviation de l'air (3) sont situés dans un angle entre 30° et 80° par rapport à l'axe en longueur de l'arbre (4).

11. Aérateur selon la revendication 1 **caractérisée** en cela que les disques de déviation de l'air (3) sont fixés de manière à basculer tout en étant sécurisés contre les déformations de manière centrique sur l'arbre (4) à des intervalles réguliers ou irréguliers ou dans le sens de la longueur de l'arbre (4).

12. Aérateur selon la revendication 1 **caractérisée** en cela que les disques de déviation de l'air (3) présentent sur au moins un côté un élément de guidage (8) avec au moins une fente de placement (16) dans laquelle un guidage (7) attribué en forme de cercle agit dans le canal (5) et/ou dans un cache (6) laissant passer l'air relié à celle-ci.

13. Aérateur selon la revendication 12 caractérisé en cela
que le guidage en forme de cercle est formé de rainures (7) dans le cache (6) qui peut être placé et fixé sur le canal (5) et de rainures (7) dans le canal en forme de courbe (5).

14. Aérateur selon la revendication 12 caractérisé en cela
qu'au moins un autre élément de guidage (8) et/ou un logement de guidage (14) est prévu sur les disques de déviation de l'air (3) qui agit également sur les rainures (7) d'un guidage en forme de cercle (13).

15. Aérateur selon la revendication 12 caractérisé en cela
qu'au moins un élément de guidage (8) est situé sur le côté avant et sur le côté arrière de la surface des disques de déviation de l'air (3).

16. Aérateur selon la revendication 1 **caractérisée** en cela que l'arbre (4) est composé de plastique ou de caoutchouc ou est une corde en plastique ou en acier.

17. Aérateur selon la revendication 1 caractérisé en cela
que les différentes pièces de l'aérateur (1) sont dans un matériau laissant passer la lumière et/ou guidant la lumière.

18. Aérateur selon la revendication 17 **caractérisée** en cela que dans l'aérateur (1) au moins un moyen d'éclairage est placé de sorte à ce qu'au moins une partie de la lumière soit conduite dans l'arbre (4).

19. Aérateur selon la revendication 17 **caractérisée** en cela qu'au moins l'arbre (4) et/ou les disques de déviation de l'air (3) sont dans un matériau fluorescent en polycarbonate (matériau LISA) ou sont revêtus de sorte à ce que la lumière sorte seulement sur les bords des disques de déviation de l'air (3).
